# EUROPÄISCHE PATENTSCHRIFT

(11) **EP 2 101 000 B1**
(45) Veröffentlichungstag und Bekanntmachung des Hinweises auf die Patenterteilung: **23.07.2014**
(21) Anmeldenummer: 09003526.2
(22) Anmeldetag: 11.03.2009
(51) Int. Cl.: E03B 9/08, F16K 3/24, F16K 27/00

(54) **Hydrant**
Hydrant
Bouche d'incendie

(30) Priorität: 14.03.2008 DE 102008014423
(43) Veröffentlichungstag der Anmeldung: 16.09.2009
(73) Patentinhaber: AVK Holding A/S, 8464 Galten (DK)
(72) Erfinder: Künstler, Wolfgang, 42329 Wuppertal (DE)
(74) Vertreter: Sparing, Rolf Klaus

(56) Entgegenhaltungen:
- EP-A1- 2 218 838
- WO-A1-02/35019
- DE-A1- 2 621 163
- DE-U- 1 895 594

## Beschreibung

Die Erfindung betrifft einen Hydranten nach dem Oberbegriff des Anspruchs 1.

Aus dem Stand der Technik sind Hydranten bekannt, die insbesondere als Unterflurhydranten ausgebildet sein können und ein gehäuseartiges Mantelrohr umfassen, das an seinem unteren Ende mit einem Wasserleitungsnetz verbindbar ist und in der Nähe seines oberen Endes eine Verbindungsmöglichkeit für einen Anschluss des Hydranten an ein Standrohr zur Wasserentnahme aufweist. Das Mantelrohr weist einen innenseitig angeordneten Ventilsitz und einen mit dem Ventilsitz in Anlage bringbaren Ventilkopf auf, an dessen Umfang eine geschlossen umlaufende Dichtkante angeordnet ist. Der Ventilkopf ist über ein Stellorgan innerhalb des Mantelrohres vertikal verlagerbar und kann zwischen einer Schließposition, in der die Dichtkante mit dem Ventilsitz in Anlage ist und das Mantelrohr gegen ein Durchtreten von Wasser gesperrt ist, und einer Offenposition, in der die Dichtkante zu dem Ventilsitz beabstandet und In der Wasser aus dem Leitungsnetz durch das Mantelrohr hindurchtreten kann, verlagert werden kann. Der Ventilkopf weist eine im Wesentlichen kreiszylinderförmige Erstreckung auf, wobei die Verlagerungsbewegung des Ventilkopfes in Richtung der Hauptachse der Zylinderform erfolgt und die Dichtkante den Ventilkopf in einer horizontalen Ebene umläuft. In einer Seitenwand des Mantelrohrs bzw. des Ventilsitzes ist eine Entwässerungsöffnung angeordnet, die mit einem Entwässerungskanal verbunden ist und durch welche in einer geschlossenen Position des Ventilkopfes Wasser, das sich oberhalb des Ventilkopfes in dem Mantelrohr befindet, abfließen kann. Um ein Abfließen von Wasser durch den Entwässerungskanal in der geöffneten Position des Ventilkopfes zu verhindern, wird die Entwässerungsöffnung von einer Seitenfläche des Ventilkopfes abgedeckt. Nachteilig an dieser Anordnung ist, dass die Entwässerungsöffnung in der geschlossenen Position des Ventilkopfes nur durch eine kleine, seitlich an dem Ventilkopf angeordnete Öffnung erreichbar ist, die sich leicht mit Schmutz zusetzen kann, so dass der Zugang zu dem Entwässerungskanal verstopft ist und das Wasser in dem Hydranten oberhalb des Ventilkopfes nicht abfliessen kann. Dies ist insbesondere deshalb ungewünscht, weil oberhalb des Ventilkopfs angesammeltes, eventuell verschmutztes Wasser nach einem Öffnen des Ventils und einem entsprechenden Druckausgleich in dem Mantelrohr zurück in das Leitungsnetz gelangen kann. Weiter ist nachteilig, dass durch die im Wesentlichen horizontal verlaufende Dichtkante Wasser und auch Verschmutzungen nicht in Richtung des Entwässerungskanals befördert werden, sondern im Innenraum des Mantelrohres verbleiben. Darüber hinaus ist die zwischen Ventilsitz und Ventilkopf hindurch tretende Wassermenge nur schwer dosierbar, da die horizontal angeordnete Dichtkante bei einer vertikalen öffnungsbewegung des Dichtkopfes unmittelbar einen relativ großen Durchlass freigibt.

DE 34 35 778 A1 beschreibt einen Unterflurhydranten mit einem gehäuseartigen Mantelrohr, das an seiner Unterseite mit einem Wasserleitungsnetz verbindbar ist. Das Mantelrohr weist an seiner Unterkante einen Ventilsitz auf, der als hohlzylinderförmige Ventilsitzbuchse ausgebildet ist. Ein mit dem Ventilsitz in Anlage bringbarer Ventilkopf weist einen im Wesentlichen kreiszylinderförmigen Dichtkörper auf, der an seinem oberen Ende nach außen auskragt. Für ein dichtendes Verschließen des Mantelrohres weist der Dichtkörper eine den Dichtkörper horizontal umlaufende Radialdichtung auf, wobei der auskragende obere Rand des Dichtkörpers eine zweite, mit dem Ventilsitz in Anlage bringbare Axialdichtung bildet. Oberhalb des Dichtkörpers weist der Ventilkopf einen metallischen Ventilkörper auf, der in etwa rohrförmig ausgebildet ist. An der Seitenfläche des metallischen Dichtkörpers ist eine seitliche Dichtfläche vorgesehen, die mit einer seitlichen Entwässerungsöffnung des Mantelrohrs in Überdeckung bringbar ist. Nachteilig an dieser Anordnung ist, dass die seitliche Dichtfläche ein getrenntes, zusätzlich anzubringendes Dichtungselement bildet, das zusätzlichen Fertlgungsaufwand bei der Herstellung des Ventilkopfes notwendig macht und sich Im Betrieb des Hydranten von dem Ventilkopf lösen kann. Nachteilig ist weiter, dass der Entwässerungskanal in dieser Konfiguration relativ weit oberhalb des Dichtkörpers angeordnet sein muss, so dass oberhalb des Dichtkörpers stets eine gewisse Menge an Restwasser in dem Mantelrohr verbleibt. Nachteilig ist weiter, dass sich Verschmutzungen bevorzugt in dem unterhalb des Entwässerungskanal liegenden Bereiches sammeln und von dort nicht durch den Entwässerungskanal ausgespült werden können.

DE 27 08 598 A1 beschreibt einen Hydranten mit einem gehäuseartigen Mantelrohr und einem in dem Mantelrohr innenseitig angeordneten Ventilsitz sowie mit einem mit dem Ventilsitz in Anlage bringbaren Ventilkopf. Der Ventilsitz ist in einem Seitenbereich des Mantelrohres angeordnet und umschließt ringförmig eine Öffnung, die in einer gegenüber der Vertikalen um einen Winkel geneigten Ebene angeordnet ist. Der Ventilkopf weist eine Dichtfläche auf, die mit dem Ventilsitz in Anlage bringbar ist und in einer gegenüber der Vertikalen um einen entsprechenden Winkel geneigten Ebene angeordnet ist. Der Ventilkopf ist in vertikaler Richtung relativ zu dem Ventil verstellbar, so dass die von dem Ventilsitz umschlossene Öffnung zur Freigabe eines Wasserdurchtritts freigegeben werden kann. Nachteilig an dem beschriebenen Hydranten ist, dass die Dichtfläche des Ventilkopfs bei vertikaler Verlagerung des Ventilkopfs nicht senkrecht in den Ventilsitz gepresst wird, so dass es zu einer Scherspannung zwischen Dichtfläche und Ventilsitz kommt, was zu einer mechanischen Belastung und Verschleiß der Dichtfläche führt. Nachteilig ist ferner, dass eine Entwässerungsöffnung des Mantelrohrs nur durch einen separaten Verschlussmechanismus zu verschließen ist. Ist durch einen Bedienfehler bei geöffnetem Hydranten auch die die Entwässerungsöffnung freigegeben, kann ungewollte Wasser austreten. Umgekehrt kann bei versehentlich geschlossener Entwässerungsöffnung kein Wasser aus dem Mantelrohr abfliessen, so dass sich Verschmutzungen im Bereich der Entwässerungsöffnung ablagern können.

DE 691 04 275 T2 beschreibt einen Hydranten mit einem gehäuseartigen Mantelrohr, welches an seiner Unterseite eine von einem Ventilsitz umringte Öffnung zum Anschluß an eine Wasserleitung aufweist. Ein in vertikaler Richtung verstellbarer erster Ventilkopf ist in dem Mantelrohr aufgenommen. Der Ventilkopf weist einen kegelstumpfförmig geformten oberen Abschnitt auf, welcher nach unten hin von einer horizontal verlaufenden, den Ventilkopf umfangsmäßig umschließenden Dichtkante begrenzt wird. Bei geschlossenem Hydranten liegt die Dichtkante an einer Entwässerungsöffnung an, so dass in dem Mantelrohr verbliebenes Wasser durch die Entwässerungsöffnung austreten kann. Nachteilig an diesem Hydranten ist, dass in dem Mantelrohr zurückbleibendes Wasser nicht vollständig in Richtung der Entwässerungsöffnung geleitet wird, so dass Verschmutzungen im Inneren des Mantelrohrs zurückbleiben.

DE 26 21 163 A1 beschreibt einen Hydranten, umfassend ein gehäuseartiges Mantelrohr mit einem innenseitig angeordneten Ventilsitz, einem mittels einer Spindel axial verlagerbaren Ventilkopf, der mit dem Ventilsitz in Anlage bringbar ist, und eine in einer Seitenwand des Mantelrohrs angeordneten Entwässerungsöffnung für den Ablauf von in dem Hydranten befindlichem Restwasser. Der Ventilkopf weist eine Gummiummantelung auf, deren dem Ventilsitz zugekehrte Außenfläche als Umlenkrand, Prallrand, Abstreifrand, Leitfläche, untere Ringnut und obere Ringnut, Dichtwulst und Abstreiflippe mit Abstreifkante ausgebildete umlaufende Profilabschnitte besitzt. Die einzelnen Profilabschnitte weisen Teilabschnitte auf, die in einem Winkel gegenüber einer vertikalen und einer horizontalen Achse des Hydranten geneigt sind. In einer Schließposition des Ventilkopfs liegen die Profilabschnitte an einer Innenwand des Mantelrohrs an, wobei die Abstreiflippe in einem Bereich einer unteren Kante der Entwässerungsöffnung angeordnet ist.

DE 18 95 594 U beschreibt einen Hydrant, umfassend ein gehäuseartiges Mantelrohr, einen in dem Mantelrohr innenseitig angeordneten Ventilsitz, der mit einem mittels einer Spindel axial verlagerbaren Ventilkopf zusammenwirkt, sowie einer in dem Mantelrohr vorgesehen Entwässerungsöffnung zur Restentleerung des Hydranten. Der Ventilkopf weist einen elastischen Dichtring auf, der in einer Nut mit trapezförmigen Querschnitt gehalten ist, und in einer Schließposition des Ventilkopfs an einer Innenwand des Mantelrohrs im Bereich einer unteren Kante der Entwässerungsöffnung anliegt.

DE 100 52 505 B4 beschreibt einen Hydranten, umfassend ein gehäuseartiges Mantelrohr, in dem Innenseitig ein Ventilsitz angeordnet ist, der mit einem als Kugel ausgebildeten Ventilkopf ein Rückschlagventil bildet, einen mittels einer Spindel axial verlagerbaren Ventilkörper sowie eine in dem Mantelrohr angeordneten Entwässerungsöffnung für einen Restwasserablauf des Hydranten. In einer geschlossenen Position liegt der Ventilkopf infolge einer Druckbeaufschlagung des Wassers an dem Ventilsitz an, wobei der Ventilkörper mit einem umlaufenden zylindrischen Abschnitt in einem Bereich der Entwässerungsöffnung an dem Mantelrohr anliegt und als Dichtglied wirkt. Bei Verlagerung des Ventilkörpers in Richtung des Ventilkopfs verlässt der zylindrische Abschnitt des Ventilkörpers den Ventilsitz, wobei ein durchströmbarer Randquerschnitt entsteht. Der Ventilkörper gelangt dabei in Anlage mit dem Ventilkopf und verlagert diesen in einer gemeinsamen Bewegung entgegen der Fließrichtung des Wassers aus dem Ventilsitz, wodurch eine Öffnung des Rückschlagventils erreicht ist.

Es ist die Aufgabe der Erfindung, einen Hydranten zu schaffen, der einen erhöhten Bedienkomfort aufweist.

Diese Aufgabe wird erfindungsgemäß durch die Merkmale des Anspruchs 1 gelöst.

Durch das erfindungsgemäße Vorsehen einer gegen die Horizontale geneigten Dichtkante, die den Umfang des Ventilkopfes geschlossen umläuft, wird vorteilhaft ein Hydrant geschaffen, bei dem in einer geschlossenen Position des Ventilkopfes oberhalb des Ventilkopfes verbliebenes Restwasser einfach in Richtung eines Entwässerungskanals abgeleitet werden kann. Insbesondere, wenn der Ventilsitz als eine im Wesentlichen vertikal verlaufende, hohlzylinderförmige Ventilsitzbuchse ausgebildet ist, deren Endbereich in einer horizontalen Ebene verläuft, wird durch das Vorsehen einer gegen die Horizontale geneigten Dichtkante weiter vorteilhaft ermöglicht, dass eine durch das Ventil hindurchtretende Wassermenge besonders einfach dosierbar ist, da bei einer vertikalen Verlagerung des Ventilkopfes zunächst nur ein kleiner Bereich der Dichtkante außer Eingriff mit dem Ventilsitz gelangt.

Vorteilhaft liegt die erste Dichtkante in einer Schließposition des Ventilkopfs an der Innenwand des Mantelrohrs bzw. Ventilsitzes in Höhe der unteren Kante des Entwässerungskanals an. Besonders bevorzugt handelt es sich bei dem an der unteren Kante der Entwässerungsöffnung anliegenden Teil der Dichtkante um den vertikal am tiefsten gelegenen Teil der Dichtkante, so dass sämtliches oberhalb des Ventilkopfes verbliebenes Wasser in Richtung der Entwässerungsöffnung befördert wird. Hierdurch werden auch vorteilhaft eventuell zurückgebliebene Schmutzpartikel durch das auslaufende Wasser aus dem Innenbereich des Mantelrohres in den Entwässerungskanal transportiert. Weiter wird durch diese Anordnung vorteilhaft ermöglicht, dass die Entwässerungsöffnung und der Zugang zu der Entwässerungsöffnung großzügig dimensioniert sein können, so dass ein Verstopfen der Entwässerungsöffnung durch Verschmutzungen unwahrscheinlich wird.

Vorzugsweise weist der Ventilkopf eine radiale Dichtfläche auf, die von der ersten Dichtkante begrenzt wird, wobei die Dichtfläche auf einer Zylindermantelfläche angeordnet Ist. Vorteilhaft weist dabei auch der Ventilsitz eine hohlzylinderförmige Form auf. Durch ein vertikales Verbringen des Ventilkopfes in den Ventilsitz wird dabei durch ein Anliegen der radialen Dichtfläche an dem Ventilsitz eine sichere Abdichtung des Hydranten erreicht. Vorzugsweise besteht der Ventilkopf dabei wenigstens im Bereich der radialen Dichtfläche aus einem elastischen Material, so dass eventuell in dem Dichtbereich verbliebene Verschmutzungen oder anderweitige Partikel einer sicheren Abdichtung nicht entgegenstehen.

Vorzugsweise Ist die Dichtfläche auf der Mantelfläche eines geraden Kreiszylinders angeordnet und die erste Dichtkante ist gegenüber einer zu der Mittelpunktachse des geraden Kreiszylinders vertikalen Ebene geneigt ausgebildet. In dieser bevorzugten Ausgestaltung, in der der Ventilkopf und der Ventilsitz in einer horizontalen Ebene einen kreisförmigen Querschnitt haben, ist ein besonders sicheres Zusammenwirken des Ventilkopfes mit dem Ventilsitz sichergestellt, insbesondere da ein Verdrehen des Ventilkopfes oder auch Fertigungstoleranzen nur minimalen Einfluss haben. Die Dichtkante ist dabei gegen die Horizontale geneigt, so dass die Dichtkante im Querschnitt einer von der Kreisform abweichenden Form und besonders bevorzugt eine elliptische Form aufweist. Es versteht sich jedoch, dass der Ventilsitz eine beliebige andere Form aufweisen kann, insbesondere beispielsweise eine hohlzylindrische Form mit elliptischem Querschnitt. Die Dichtfläche ist dann entsprechend auf einer anderen, an den Ventilsitz angepassten Fläche angeordnet, beispielsweise ebenfalls auf einer Mantelfläche eines Zylinders mit elliptischem Querschnitt. Es versteht sich weiter, dass die Dichtkante unabhängig von der Form des Ventilsitzes nicht notwendig in einer geraden, gegen die Horizontale geneigten Ebene angeordnet sein muss, so dass die Dichtkante beispielsweise auch in einer gekrümmten, aber gegen die Horizontale geneigten Ebene angeordnet sein kann.

Zweckmäßig wird die radiale Dichtfläche von einer gegen die Horizontale geneigten zweiten Dichtkante begrenzt. Insbesondere in dieser Ausgestattung kann eine von erster und zweiter Dichtkante als eine obere Dichtkante ausgebildet sein, die in einer geschlossenen Position des Ventilkopfes an der Unterkante einer seitlichen Entwässerungsöffnung des Mantelrohrs anliegt und über die in dem Mantelrohr verbliebenes Wasser in Richtung der Entwässerungsöffnung abfließen kann. Vorzugsweise ist dann die andere von erster und zweiter Dichtkante als eine untere Dichtkante ausgebildet, welche das Mantelrohr gegenüber dem Leitungswassernetz abdichtet. Insbesondere, wenn die untere Dichtkante mit einem horizontal verlaufenden Ventilsitz zusammenwirkt, wird durch die Neigung der unteren Dichtkente gegen die Horizontale vorteilhaft ermöglicht, bei einer vertikalen Verlagerung des Ventilkopfes die durch das Ventil hindurch tretende Wassermenge einfach zu dosieren, da durch die Relativbewegung zwischen Dichtkante und Ventilsitz zunächst nur eine relativ kleine Öffnung freigegeben wird, die sich erst mit weiterer Verlagerung der unteren Dichtkante vergrößert.

Zweckmäßig weist die Dichtfläche eine so große vertikale Erstreckung auf, dass die Entwässerungsöffnung bereits vollständig überdeckt ist, wenn Wasser aus dem unteren Bereich des Mantelrohrs an dem Ventilkopf in den oberen Bereich des Mantelrohrs gelangt.

Zweckmäßig sind die erste Dichtkante und die zweite Dichtkante parallel zueinander angeordnet. Es versteht sich jedoch, dass die erste Dichtkante und die zweite Dichtkante ebenso in einem Winkel zueinander angeordnet sein können. Hierdurch kann der Dichtkopf flexibel an unterschiedlich gestaltete Mantelrohre, beispielsweise mit in unterschiedlicher Höhe angeordneten Entwässerungsöffnungen, angepasst werden.

Vorzugsweise umfasst der Ventilkopf einen oberhalb der ersten Dichtkante angeordneten, kegelstumpfartigen Bereich. Hierdurch wird weiter sichergestellt, dass oberhalb des Ventilkopfes verbliebenes Wasser sicher in Richtung der ersten Dichtkante abgeleitet wird und dass eventuell zurückgebliebene Verschmutzungen und Partikel in dem Entwässerungskanal transportiert werden.

Vorzugsweise umfasst der Ventilkopf wenigstens ein unterhalb der ersten Dichtkante angebrachtes Führungselement. Besonders bevorzugt sind dabei unterhalb der ersten Dichtkante wenigstens zwei Führungselemente angeordnet, welche an sich gegenüberstehenden Seitenflächen des Mantelrohres bzw. Ventilsitzes mit diesem in Eingriff sind. Insbesondere, wenn der Ventilkopf im Wesentlichen nur entlang der radialen Dichtfläche mit dem Ventilsitz bzw. der inneren Seite des Mantelrohrs in Kontakt steht, kann durch die Führungselemente, die sich vorzugsweise im Wesentlichen vertikal entlang der Mantelrohrinnenfläche erstrecken, ein Verkanten des Ventilkopfes sicher vermieden werden. In einer besonders bevorzugten Ausgestaltung ist dabei das wenigstens eine Führungselement unterhalb der Entwässerungsöffnung angeordnet, so dass die Entwässerungsöffnung in einer angehobenen Position des Ventilkopfes von einer Seitenfläche des Führungselements überdeckt wird.

Zweckmäßig ist der Ventilsitz als ein an der Innenseite des Mantelrohrs angeordneter Ventilsitzring ausgebildet. Es versteht sich, dass der Ventilsitz jedoch auch durch einen entsprechend ausgebildeten Bereich des Mantelrohrs selbst ausgebildet sein kann, ohne dass ein separater Ventilsitzring vorgesehen sein muss.

Zweckmäßig umfasst das Mantelrohr eine der Entwässerungsöffnung benachbarte Auswölbung. Zweckmäßig ist dabei der Ventilkopf in den Bereich der Auswölbung verlagerbar, um ein Umströmen des Ventilkopfes mit Leitungswasser zu vereinfachen. Eine Öffnung des Ventils ist somit besonders einfach durch ein vertikales Verbringen des Ventilkopfes in den Bereich der Auswölbung möglich.

Zweckmäßig ist der Ventilkopf an einem sich im Wesentlichen vertikal erstreckenden Verbindungselement montierbar. Das Verbindungselement verbindet dabei den Ventilkopf vorzugsweise mit einem an dem oberen Ende des Mantelrohrs angeordneten Stellorgan, durch welches der Ventilkopf zwischen einer Schließposition und einer Offenposition verlagerbar ist. Besonders bevorzugt umfasst das Stellorgan eine Spindel und eine auf der Spindel verlagerbare Spindelmutter. Hierdurch wird auf einfache Weise ein sicher funktionierender Verstellmechanismus für den Ventilkopf geschaffen. Die Spindelmutter ist zweckmäßig In dem Mantelrohr vertikal geführt. Zweckmäßig Ist das Mantelrohr an seinem unteren Ende mit einer Netzleitung verbindbar.

Ein Ventilkopf für die Verwendung in einem Hydranten umfasst einen an einem Verbindungselement angrenzenden oberen Bereich, eine von einer ersten umlaufenden Dichtkante begrenzte radiale Dichtfläche und wenigstens eine Führungsfläche, wobei die Dichtfläche Abschnitte einer Zylindermantelfläche umschreibt, wobei die erste Dichtkante gegen eine zu der Mittelachse des Zylinders vertikal verlaufende Ebene geneigt ist. Durch das erfindungsgemäß Vorsehen einer gegen die Erstreckungsachse des Ventilkopfes geneigten Dichtkante wird vorteilhaft ein Ventitkopf geschaffen, der ein sicheres Abfließen von Restwasser aus einem Hydranten und eine verbesserte Steuerung eines Wasserdurchflusses durch einen Hydranten ermöglicht.

Vorzugsweise ist die radiale Dichtfläche von einer gegen die Achse der Zylinderfläche geneigten zweiten Dichtkante begrenzt, wobei besonders bevorzugt die erste Dichtkante und die zweite Dichtkente parallel zueinander angeordnet sind. Durch das Vorsehen zweier zueinander beabstandeter Dichtkante wird vorteilhaft ermöglicht, den Ventilkopf auch in bereits bestehenden Hydranten zu verwenden.

Zweckmäßig ist die Dichtfläche aus einem elastischen Material ausgebildet. Ganz besonders bevorzugt ist dabei der Ventilkopf insgesamt mit einem elastischen Oberflächenmaterial versehen, welches zweckmäßig eine Oberfläche aufweist, die eine Ablagerung von Schmutz oder Partikeln vermindert.

Vorzugsweise ist die Führungsfläche an einem dem oberen Bereich abgewandten Führungselement angeordnet. Besonders bevorzugt sind dabei mehr als eine, insbesondere zwei Führungsflächen vorgesehen, welche an gegenüberliegenden Seitenflächen angeordnet sind und eine sichere Führung ermöglichen, wobei ein Verkanten des Ventilkopfes in einem Führungsrohr, beispielsweise einem Mantelrohr, verhindert wird.

Weitere Vorteile und Merkmale der Erfindung ergeben sich auch aus der nachstehenden Beschreibung eines bevorzugten Ausführungsbeispiels sowie aus den abhängigen Ansprüchen.

Die Erfindung wird nachstehend unter Bezugnahme auf die anliegenden Zeichnungen anhand eines bevorzugten Ausführungsbeispiels näher erläutert.
- Fig. 1: zeigt einen Hydranten in einer seitlichen Querschnittsansicht.
- Fig. 2: zeigt eine Seitenansicht eines Ventilkopfs.
- Fig. 3: zeigt eine seitliche Querschnittsansicht des Ventilkopfes aus Fig. 2.
- Fig. 4: zeigt eine weitere Ansicht des Ventilkopfes mit teilweise weggebrochener Seitenfläche.
- Fig. 5: zeigt eine Querschnittsansicht von unten des Ventilkopfes entlang der Linie V-V aus Fig. 2.
- Fig. 6: zeigt eine perspektivische Ansicht des Ausführungsbeispiels eines Ventilkopfes gemäß Fig. 2.

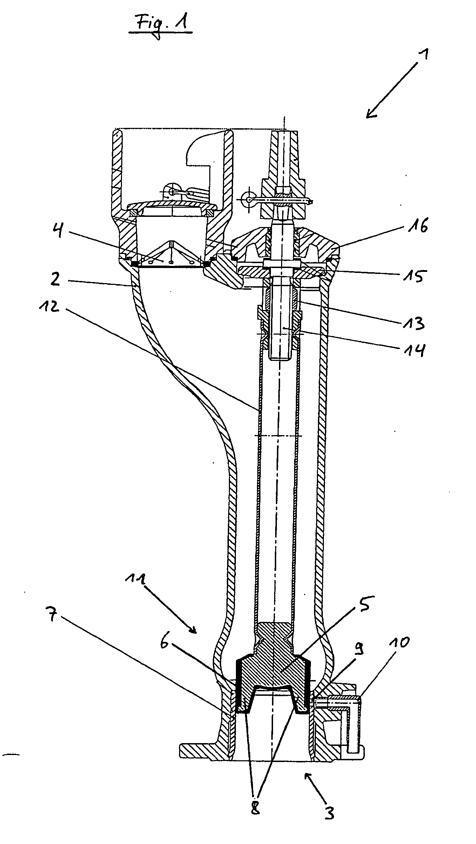

Fig. 1 zeigt eine seitliche Querschnittsansicht eines Hydranten 1, Der Hydrant 1 umfasst ein gehäuseartiges Mantelrohr 2, das an seiner Unterseite eine Zuflussöffnung 3 für einen Anschluss an eine Netzwasserleitung und an seinem oberen Ende einen Anschlussbereich 4 aufweist, der zu einem Standrohranschluss hinführt. Der Hydrant 1 weist in seinem unteren Bereich einen Ventilkopf 5 auf. Das Mantelrohr 2 weist innenseitig einen hohlzylinderförmigen Ventilsitzring 7 auf, welcher mit der Dichtungsfläche 6 zusammenwirkt. Weiter sind in einem unteren Bereich des Ventilkopfes 5 zwei Führungselemente 8 angeordnet, welche ebenfalls mit dem Ventilsitzring zusammenwirken. In einem seitlichen Bereich des Mantelrohrs 2 ist eine Entwässerungsöffnung 9 angeordnet, welche mit einem Entwässerungskanal 10 verbunden Ist. Oberhalb des Ventilsltzringes 7 weist das Mantelrohr 2 eine Ausbauchung 11 auf, in welche der Ventilkopf 5 in der dargestellten Offenstellung verbracht ist. Durch die Zuflussöffnung 3 einströmendes Wasser kann dabei an dem Ventilkopf 5 vorbeiströmen und gelangt in den oberen Bereich des Mantelrohres 2 und zu dem Standrohranschluss 4. Der Ventilkopf 5 ist in seinem oberen Bereich mit einem vorliegend rohrförmig ausgebildeten Verbindungselement 12 verbunden. Das Verbindungselement 12 ist an seinem oberen Ende drehfest mit einer Spindelmutter 13 verbunden, welche drehbar auf einer Spindel 14 gelagert ist und verdrehsicher in dem Mantelrohr 2 axial geführt ist. Die Spindel 14 ist an dem oberen Ende des Mantelrohrs 2 in einer Spindelauflagescheibe 15 drehbar gelagert und durchsetzt einen oberen Verschlussdeckel 16, welcher lösbar an dem Mantelrohr 2 befestigt ist und dieses nach oben hin verschließt. Die Spindelmutter 13 und die Spindel 14 bilden gemeinsam ein Stellorgan für den Ventilkopf 5, wobei durch eine Drehung der Spindel 14 die Spindelmutter 13 vertikal nach oben bzw. unten geführt wird, wodurch auch der Ventilkopf 5 vertikal verlagert wird. Die Dichtungsfläche 6 des Ventilkopfes 5 kommt dabei in einer Schließposition des Ventilkopfes 5 mit dem Ventilsitzring 7 in Anlage und schließt den Innenraum des Mantelrohres 2 dichtend gegenüber der Zuflussöffnung 3 ab. Gleichzeitig wird in der Schließposition des Ventilkopfes 5 die Entwässerungsöffnung 9 freigegeben, so dass in dem Innenraum des Mantelrohres 2 oberhalb des Ventilkopfes 5 zurückgebllebenes Wasser ablaufen kann.

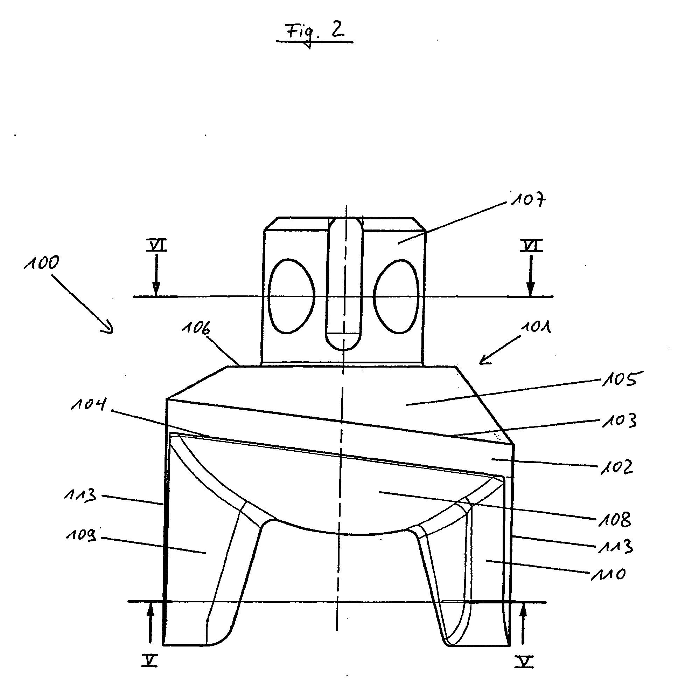

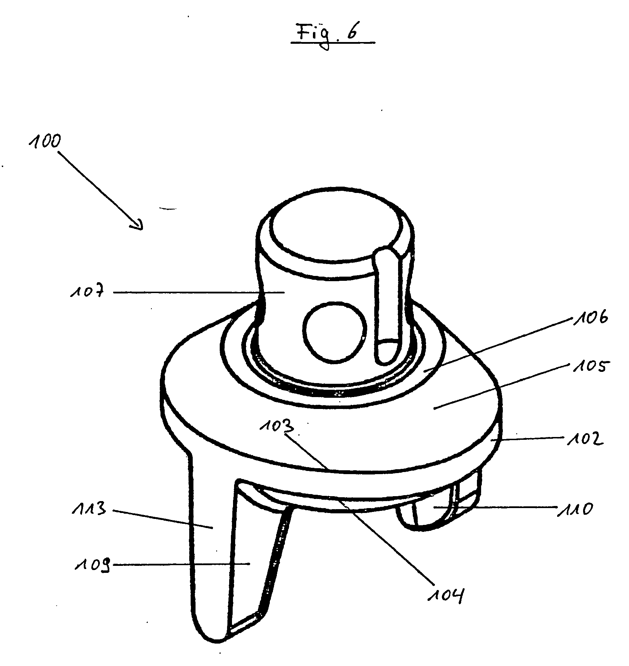

Im Folgenden wird auf Fig. 2 bis Fig. 6 Bezug genommen, welche ein erstes Ausführungsbeispiel eines Ventilkopfs 100 zeigen. Der Ventilkopf 100 weist einen in etwa linsenförmigen Ventilkopfkörper 101 auf, der in seinem mittleren Bereich von einer Dichtfläche 102 umlaufen wird. Die Dichtfläche 102 wird von einer oberen Dichtkante 103 und einer unteren Dichtkante 104 begrenzt, wobei beide Dichtkanten 102, 104 gegenüber der horizontalen Ebene geneigt sind. An die obere Dichtkante 103 schließt sich ein kegelstumpfförmlger oberer Bereich 105 des Ventilkopfes an, dessen Mantelfläche jeweils an den Verlauf der oberen Dichtkante 103 angepasst In unterschiedlichen Winkeln gegenüber der Horizontalen angeordnet ist. Der kegelsturnpfartige obere Bereich 105 weist an seinem oberen Ende einen horizontal verlaufenden, ringförmigen Absatz 106 auf, an den sich ein Anschlusselement 107 für eine Verbindung mit einem Verbindungselement (nicht dargestellt) anschließt.

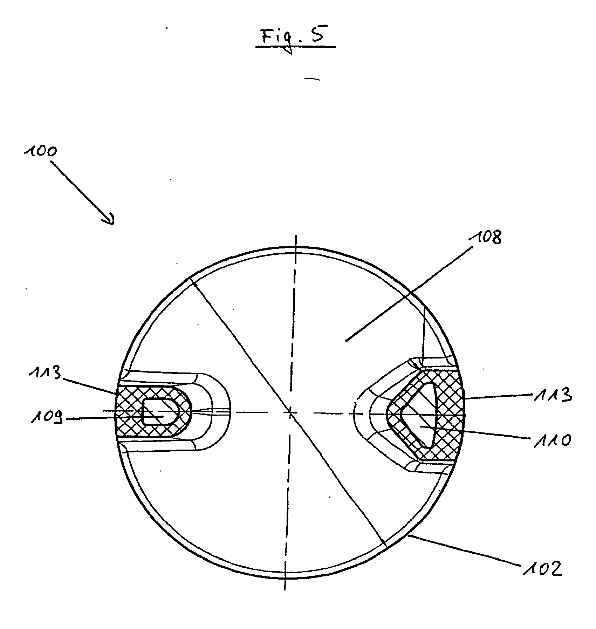

Unterhalb der unteren Dichtkante 104 schließt sich ein kugelsegmentartig geformter unterer Bereich 108 an, welcher in einer Einbauposition des Ventilkopfs 100 dem netzseitigen Teil eines Mantelrohres zugewandt ist. In dem unteren Bereich 108 des Ventilkopfs 100 sind weiter ein erstes Führungselement 109 und ein zweites Führungselement 110 angeordnet, die jeweils eine im Wesentlichen vertikale Erstreckung aufweisen. Wie Insbesondere In Fig. 5 gut zu erkennen ist, überdeckt die Dichtfläche 102 Abschnitte einer Mantelfläche eines geraden Kreiszylinders, dessen Hauptachse A mit der vertikalen Erstreckung des Ventilkopfes zusammenfällt.

Auch die Außenfläche der Führungselemente 109, 110 überdecken Abschnitte der Mantelfläche des Kreiszylinders.

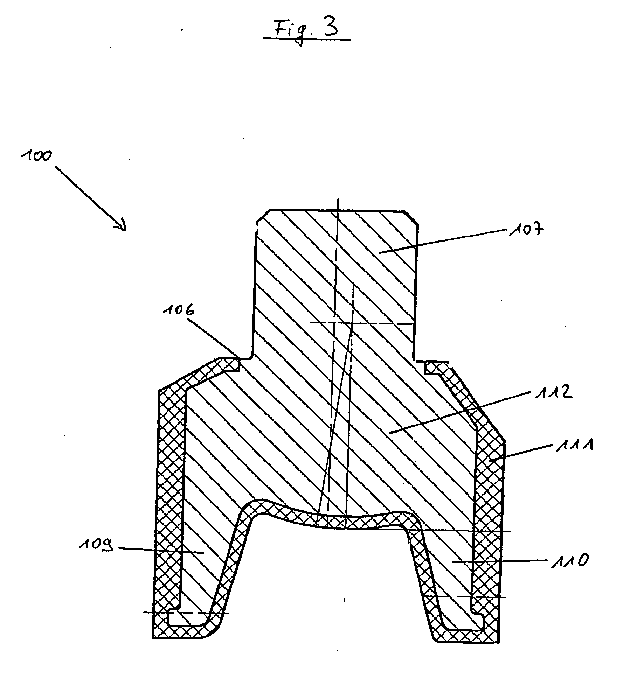

Wie insbesondere in Fig. 3, Fig. 4 und Fig. 5 gut zu erkennen ist, ist die Oberfläche des kegelstumpfförmigen oberen Bereichs 105, der Dichtfläche 102, des kugelsegmentförmigen unteren Bereichs 108 und der Führungselemente 109, 110 mit einem elastischen Material 111 bedeckt. Das elastische Material 111 dient dabei der Abdichtung gegenüber einer den Ventilkopf 100 umgebenden Ventilsitzoberfläche und ermöglicht es vorteilhaft, etwaige Toleranzen in den Abmessungen des Ventilkopfes 100 oder des Ventilsitzes auszugleichen. Der Innenbereich 112 des Ventilkopfes 100 ist dabei aus einem hochfesten Material, vorzugsweise rostfreiem Stahl, ausgebildet.

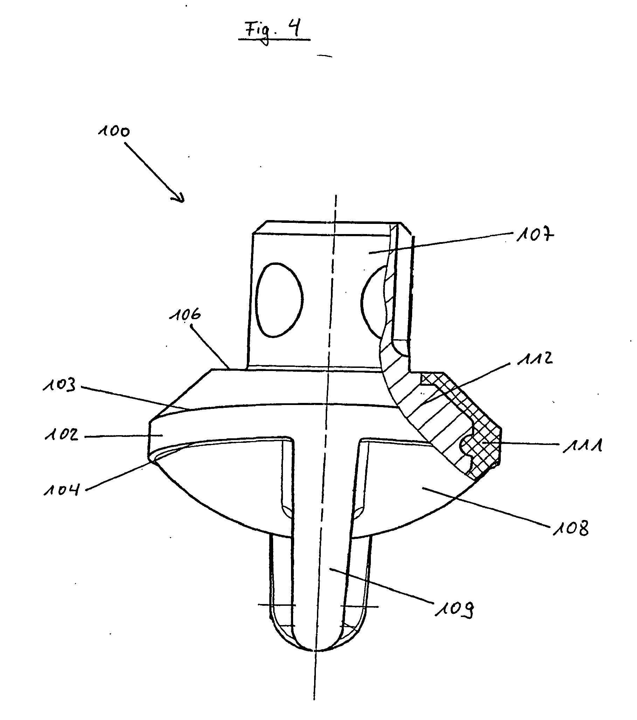

Wie insbesondere in Fig. 4 und in Fig. 5 gut zu erkennen ist, ist das zweite Führungselement 110 breiter ausgeführt als das erste Führurigselement 109. Dies bietet den Vorteil, dass das zweite Führungselement 110, welches unterhalb eines tiefsten Bereichs der Dichtfläche 102 angeordnet ist, eine in dem den Ventilkopf 100 umgebenden Mantelrohr 102 angeordnete Entwässerungsöffnung (nicht dargestellt) überdecken kann. Der Neigungswinkel gegenüber der Horizontalen der oberen Dichtkante 103 und der unteren Dichtkante 104 sowie der Abstand der Dichtkanten 103, 104 wird dabei vorzugsweise so an die Maße einer eventuellen Entwässerungsöffnung angepasst, dass die Entwässerungsöffnung in einer geöffneten Position des Ventilkopfs 100 stets verschlossen ist.

### Die Erfindung funktioniert nun wie folgt:

Der Ventilkopf 100 wird mittels des Anschlusselements 107 an einem Verbindungselement, das in vertikaler Richtung verlagerbar ist, befestigt. In einer Verschlussposition ist der Ventilkopf 100 dann in einen hohlzylinderförmigen Ventilsitzring eingeführt, so dass die Dichtfläche 102 an dem Ventilsitzring anliegt und den Bereich unterhalb der unteren Dichtkante 104 gegen den Bereich oberhalb der oberen Dichtkante 103 abdichtet. Der tiefste Punkt der oberen Dichtkante 103, der oberhalb des zweiten Führungselements 110 angeordnet ist, liegt dabei an der unteren Kante einer Entwässerungsöffnung an, so dass oberhalb der oberen Dichtkante verbliebenes Restwasser durch die Entwässerungsöffnung ablaufen kann. Die Neigung der oberen Dichtkante 103 sowie des kegelstumpfartigen oberen Bereichs 105 führt dabei dazu, dass gemeinsam mit eventuell verbliebenem Restwasser auch Verschmutzungen aus dem Bereich oberhalb der oberen Dichtkante 103 hinausgespült werden.

Um den Ventilkopf 100 von der Verschlussposition in eine Offenposition zu verbringen, wird der Ventilkopf 100 vertikal nach oben verlagert. Dabei wird die Entwässerungsöffnung von der Dichtfläche 102 und dem zweiten Führungselement 110 verschlossen. Gleichzeitig gelangt zunächst die untere Dichtkante 104 in den Bereich des ersten Führungselements 109 mit dem Ventilsitzring außer Eingriff, so dass in diesem Gebiet Wasser aus einem unteren Bereich des Ventilkopfs 100 in einen darüber gelegenen Bereich strömen kann. Durch weiteres vertikales Verlagern des Ventilkopfes nach oben bleibt die Entwässerungsöffnung weiterhin verschlossen, während ausgehend von dem Gebiet des ersten Führungselements 109 weitere Gebiete der unteren Dichtkante 104 außer Eingriff mit einem umgebenden Ventilsitz gelangen, bis schließlich die gesamte untere Dichtkante 104 nicht mehr mit dem Ventilsitz in Eingriff steht und Wasser den Ventilkopf 100 insgesamt umfließen kann. Die äußeren Flächen 113 des ersten Führungselements 109 und des zweiten Führungselements 110 bleiben dabei weiter im Eingriff mit dem umgebenden Ventilsitz, so dass der Ventilkopf 100 aus der Offenposition sicher und ohne Verkanten zurück in die Verschlussposition geführt werden kann.

Vorstehend wurde ein Ausführungsbeispiel eines Ventilkopfes beschrieben, der in einer horizontalen Schnittebene eine kreisförmige Querschnittsfläche überdeckt. Es versteht sich, dass der Ventilkopf nicht notwendig eine kreisförmige Querschnittsfläche überdecken muss, sondern auch eine andere Gestalt aufweisen kann, um beispielsweise eine elliptische Querschnlttsfläche zu überdecken. Es versteht sich ferner, dass der Ventilkopf weitere Dichtungsflächen aufweisen kann, insbesondere eine Axialdichtungsfläche für ein zusätzliches Abdichten des Mantelrohres.

## Patentansprüche

1. Hydrant, umfassend
ein gehäuseartiges Mantelrohr (2),
einen in dem Mantelrohr (2) innenseitig angeordneten Ventilsitz,
eine in der Seitenwand des Mantelrohrs (2) angeordnete Entwässerungsöffnung (9), und
einen mit dem Ventilsitz in Anlage bringbaren Ventilkopf (100), der an seinem Umfang eine geschlossen umlaufende erste Dichtkante (103) aufweist,
wobei die erste Dichtkante (103) in einer Schließposition des Ventilkopfs (100) an einer Innenwand des Mantelrohrs (2) im Bereich einer unteren Kante der Entwässerungsöffnung (9) anliegt,
**dadurch gekennzeichnet,**
**dass** die erste Dichtkante (103) gegenüber einer zu der Erstreckungsachse des Ventilkopfs (100) vertikalen Ebene geneigt ist, und
**dass** die erste Dichtkante (103) gegenüber einer horizontalen Ebene des Ventilsitzes geneigt ist.

2. Hydrant nach Anspruch 1, **dadurch gekennzeichnet, dass** der Ventilkopf (100) in Schließposition durch den Ventilsitz in vertikaler Richtung geführt ist.

3. Hydrant nach Anspruch 1 oder 2, **dadurch gekennzeichnet, dass** der Ventilkopf (100) eine radiale Dichtfläche (102) aufweist, die von der ersten Dichtkante (103) begrenzt wird, und dass die Dichtfläche (102) auf einer Zylindermantelfläche angeordnet ist.

4. Hydrant nach Anspruch 3, **dadurch gekennzeichnet, dass** die Dichtfläche (102) auf der Mantelfläche eines geraden Zylinders angeordnet ist.

5. Hydrant nach Anspruch 3 oder 4, **dadurch gekennzeichnet, dass** die radiale Dichtfläche (102) von einer gegen die Horizontale geneigten zweiten Dichtkante (104) begrenzt ist, und dass die erste Dichtkante (103) und die zweite Dichtkante (104) parallel zueinander angeordnet sind.

6. Hydrant nach einem der Ansprüche 1 bis 5, **dadurch gekennzeichnet, dass** der Ventilkopf (100) einen oberhalb der ersten Dichtkante (103) angeordneten, kegelstumpfartigen Bereich (105) umfasst, dass der Ventilkopf (100) wenigstens ein unterhalb der ersten Dichtkante (103) angebrachtes Führungselement (109, 110) umfasst, und dass das Führungselement (109, 110) mit der Entwässerungsöffnung in Überdeckung bringbar ist.

7. Hydrant nach einem der Ansprüche 1 bis 6, **dadurch gekennzeichnet, dass** der Ventilsitz als ein an der Innenseite des Mantelrohrs (2) angeordneter Ventilsitzring (7) ausgebildet ist, und dass das Mantelrohr (2) eine der Entwässerungsöffnung (9) benachbarte Auswölbung (11) aufweist.

8. Hydrant nach einem der Ansprüche 1 bis 7, **dadurch gekennzeichnet, dass** der Ventilkopf (100) mit einem sich im wesentlichen vertikal erstreckenden Verbindungselement (12) verbindbar ist, dass das Verbindungselement (12) mit einem Stellorgan verbunden ist, dass das Stellorgan eine Spindel (14) und eine auf der Spindel (14) verlagerbare Spindelmutter (13) umfasst, und dass die Spindelmutter (13) in dem Mantelrohr (2) vertikal geführt ist.

9. Hydrant nach einem der Ansprüche 1 bis 8, **dadurch gekennzeichnet, dass** das Mantelrohr (2) an seinem oberen Ende mit einem Oberteil (16) lösbar verschlossen ist, dass das Mantelrohr (2) an seinem oberen Ende mit wenigstens einem Standrohr verbindbar ist, und dass das Mantelrohr (2) an seinem unteren Ende mit einer Netzleitung verbindbar ist.

## Claims

1. Hydrant, comprising
a housing-like casing tube (2);
a valve seat arranged in the casing tube (2) on the inside;
a water drainage aperture (9) arranged in the side wall of the casing tube (2); and
a valve head (100) which can be brought into contact with the valve seat and has, on its periphery, a first sealing edge (103) which extends around it in a closed manner,
wherein the first sealing edge (103) rests, when the valve head (100) is in a closing position, against an inner wall of the casing tube (2) in the region of a lower edge of the water drainage aperture (9),
**characterised in**
**that** the first sealing edge (103) is inclined in relation to a plane which is vertical relative to the axis of extension of the valve head (100), and
**that** the first sealing edge (103) is inclined in relation to a horizontal plane of the valve seat.

2. Hydrant according to claim 1, **characterised in that** the valve head (100) is guided into a closing position by the valve seat in the vertical direction.

3. Hydrant according to claim 1 or 2, **characterised in that** the valve head (100) has a radial sealing face (102) which is delimited by the first sealing edge (103), and that the sealing face (102) is arranged on a cylindrical superficies.

4. Hydrant according to claim 3, **characterised in that** the sealing face (102) is arranged on the superficies of a straight cylinder.

5. Hydrant according to claim 3 or 4, **characterised in that** the radial sealing face (102) is delimited by a second sealing edge (104) which is inclined compared to the horizontal, and that the first sealing edge (103) and the second sealing edge (104) are arranged parallel to one another.

6. Hydrant according to one of claims 1 to 5, **characterised in that** the valve head (100) comprises a truncated cone-like region (105) arranged above the first sealing edge (103), that the valve head (100) comprises at least one guide element (109, 110) which is attached underneath the first sealing edge (103), and that the guide element (109, 110) can be brought into a position masking the water drainage aperture.

7. Hydrant according to one of claims 1 to 6, **characterised in that** the valve seat is constructed as a valve-seat ring (7) which is arranged on the inside of the casing tube (2), and that the casing tube (2) has a bulge (11) adjacent to the water drainage aperture (9).

8. Hydrant according to one of claims 1 to 7, **characterised in that** the valve head (100) can be connected to a connecting element (12) which extends substantially vertically, that the connecting element (12) is connected to an adjusting member, that the adjusting member comprises a spindle (14) and a spindle nut (13) which is displaceable on the spindle (14), and that the spindle nut (13) is guided vertically within the casing tube (2).

9. Hydrant according to one of claims 1 to 8, **characterised in that** the casing tube (2) is closed in an openable manner at its upper end by means of an upper part (16), that the casing tube (2) can be connected to at least one standpipe at its upper end, and that the casing tube (2) can be connected to a supply main at its lower end.

## Revendications

1. Bouche d'incendie comprenant
un tube d'enveloppe (2) de type boîtier,
un siège de vanne disposé du côté intérieur dans le tube d'enveloppe (2),
un orifice de drainage (9) ménagé dans la paroi latérale du tube d'enveloppe (2), et
une tête de vanne (100) qui est apte à venir en appui sur le siège de vanne et qui comporte sur sa périphérie un premier bord d'étanchéité (103) périphérique et fermé,
le premier bord d'étanchéité (103) portant, lorsque la tête de vanne (100) se trouve dans une position de fermeture, sur une paroi interne du tube d'enveloppe (2) dans la région d'un bord inférieur de l'orifice de drainage (9),
**caractérisée en ce**
**que** le premier bord d'étanchéité (103) est incliné par rapport à un plan vertical à l'axe d'extension de la tête de vanne (100), et
**que** le premier bord d'étanchéité (103) est incliné par rapport à un plan horizontal du siège de vanne.

2. Bouche d'incendie selon la revendication 1, **caractérisée en ce que**, en position fermée, la tête de vanne (100) est guidée dans une direction verticale par le siège de vanne.

3. Bouche d'incendie selon la revendication 1 ou 2, **caractérisée en ce que** la tête de vanne (100) présente une surface d'étanchéité radiale (102) qui est délimitée par le premier bord d'étanchéité (103), et **en ce que** la surface d'étanchéité (102) est disposée sur une surface d'enveloppe cylindrique.

4. Bouche d'incendie selon la revendication 3, **caractérisée en ce que** la surface d'étanchéité (102) est disposée sur la surface d'enveloppe d'un cylindre droit.

5. Bouche d'incendie selon la revendication 3 ou 4, **caractérisée en ce que** la surface d'étanchéité radiale (102) est délimitée par un second bord d'étanchéité (104) incliné par rapport à l'horizontale, et **en ce que** le premier bord d'étanchéité (103) et le second bord d'étanchéité (104) sont disposés parallèlement l'un à l'autre.

6. Bouche d'incendie selon l'une des revendications 1 à 5, **caractérisée en ce que** la tête de vanne (100) comporte une région tronconique (105) qui est disposée au-dessus du premier bord d'étanchéité (103), **en ce que** la tête de vanne (100) comprend au moins un élément de guidage (109, 110) monté au-dessous du premier bord d'étanchéité (103), et **en ce que** l'élément de guidage (109, 110) peut être amené à recouvrement avec l'orifice de drainage

7. Bouche d'incendie selon l'une des revendications 1 à 6, **caractérisée en ce que** le siège de vanne est conformé en bague de siège de vanne (7) disposée sur le côté intérieur du tube d'enveloppe (2), et **en ce que** le tube d'enveloppe (2) comporte un bombement (11) adjacent à l'orifice de drainage (9).

8. Bouche d'incendie selon l'une des revendications 1 à 7, **caractérisée en ce que** la tête de vanne (100) peut être reliée à un élément de liaison (12) qui s'étend sensiblement verticalement, **en ce que** l'élément de liaison (12) est relié à un actionneur, **en ce que** l'actionneur est une broche (14) et comporte un écrou de broche (13) déplaçable sur la broche (14), et **en ce que** l'écrou de broche (13) est guidé verticalement dans le tube d'enveloppe (2).

9. Bouche d'incendie selon l'une des revendications 1 à 8, **caractérisée en ce que** le tube d'enveloppe (2) est fermé de manière réversible à son extrémité supérieure par une pièce supérieure (16), **en ce que** le tube d'enveloppe (2) est relié à son extrémité supérieure à au moins une colonne d'incendie, et **en ce que** le tube d'enveloppe (2) peut être relié à son extrémité inférieure à un conduit d'alimentation.
